# EUROPEAN PATENT APPLICATION

(11) **EP 1 320 214 A1**
(43) Date of publication of application: **18.06.2003**
(21) Application number: 01650145.4
(22) Date of filing: 12.12.2001
(51) Int. Cl.: H04L 12/14, G07F 19/00

(54) **Unified account management for data network access**

(71) Applicant: Markport Limited, Dublin 1 (IE)
(72) Inventor: McGee, Brendan, Mount Merrion, County Dublin (IE); Parsons, Julian, Bristol BS6 7TF (GB); Cavill, Simon, Hook, Hampshire RG27 GNT (GB)
(74) Representative: Weldon, Michael James

(57) **Abstract**

a mobile subscriber enters a WLAN hotspot and finds a premium SMS number advertised to allow ASR access. The subscriber composes an SMS on their mobile device 1 containing a username selected by the subscriber and sends it to the premium SMS number. The SMS is delivered via the SMSC 2 in the mobile network to the SMS ASR Access Interface 4. Information such as the mobile subscriber's MSISDN and selected username are extracted from the SMS and submitted to the ASR application 12 in an access request operation. The ASR application interfaces to the pre-paid system 5 and checks whether a DN access account already exists for the subscriber for the WLAN in question. If no such account exists, it is created by the ASR application and a credit amount as appropriate to the premium SMS number is added to the account. The ASR then sends confirmation of the DN access account to the mobile subscriber via SMS using the SMS ASR Access Interface.

## Description

### Introduction

The invention relates to managing user accounts for the provision of data services where a user has an existing telephony account which can be used to unify charging for the data network access. The network may be a wireless local area network (WLAN) such as IEEE802.1/x, HiperLAN/2, or Bluetooth. It may alternatively be a public fixed line data network or a corporate data network.

In provision of services, the network operator is the organisation that owns the prepaid platform, voice telephony network and/or WLAN network. The service provider (hot spot owner) is the organisation that provides localised WLAN access. The service provider makes an agreement with the network operator to allow use of their WLAN access by data network users and they will receive a percentage of the revenue in return. The service provider may also make an agreement to use the account management capability of the network operator or to provide their own account management capability.

A potential WLAN user in a wireless LAN hot spot decides that they need to access to an intranet or the Internet to access corporate data/ applications or public data/applications. In order to gain WLAN access they will need to set up an account with the WLAN network operator. If prepaid usage is required they will then need to pre-credit the account with an amount suitable for WLAN access. If postpaid usage is required then they will need to be credit checked prior to using the account. In the case of prepaid usage they will need a mechanism to recharge the prepaid account once the credit has been depleted. A number of different functions for mobile operators and service providers are required, such as
- Prepaid WLAN access account set up and recharge
- Postpaid WLAN account set up and credit check
- Management of corporate WLAN accounts
- Management of prepaid WLAN accounts using one off fees and time based thresholds

A WLAN access user is likely to want instant or very quick access to WLAN access as they will have a limited time to use the access, (e.g. whilst they are waiting for a flight at an airport). Also they may not have a WLAN access account with the network operator or service provider who is providing service at that particular hot spot. Therefore, they will require a simple and quick method to set up a WLAN access account. In the case of prepaid usage they will need a simple and quick method to recharge their account should they run out of credit.

The invention is directed towards meeting the above requirements.

### Statements of Invention

According to the invention, there is provided an account setup and recharge system comprising:-
a subscriber interface for interfacing with telecommunication network subscribers;
a platform interface comprising means for interfacing with a subscriber account platform;
an account setup and recharge (ASR) function comprising means for dynamically instructing the platform to set up subscriber accounts and for dynamically instructing the platform to recharge accounts in real time in response to subscriber messages.

In one embodiment, the subscriber interface comprises means for receiving and processing subscriber text messages.

In another embodiment, the subscriber interface comprises means for receiving and processing messages from an intermediary server for direct Web or voice interaction with a subscriber.

In a further embodiment, the ASR function comprises means for determining and validating payment by subscribers.

In one embodiment, the ASR function comprises means for allocating subscriber payments according to use of a premium service.

In another embodiment, the ASR function comprises means for performing a check for existence of an account on a platform.

In a further embodiment, the ASR function comprises means for determining a type of required account based on received subscriber messages.

In one embodiment, the ASR function comprises means for performing a subscriber credit check.

In another embodiment, the ASR function comprises means for apportioning a subscriber payment to a network operator and a service provider according to an agreement.

### Detailed Description of the Invention

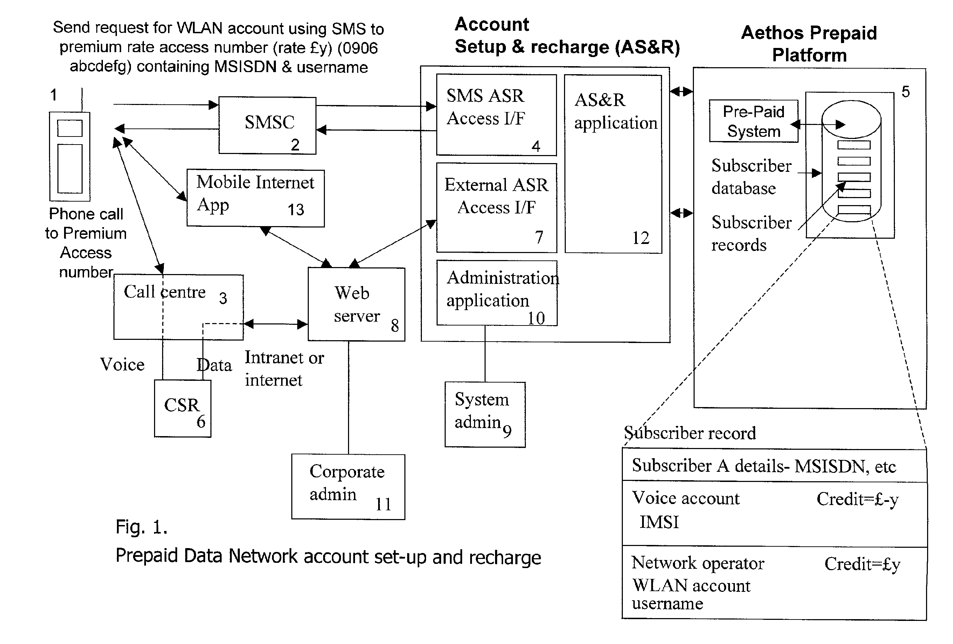

The invention will be more clearly understood from the following description of some embodiments thereof given by way of example only with reference to the accompanying drawings in which:-
Fig. 1 is a schematic diagram illustrating interaction between a mobile subscriber, an Account Setup and Recharge management system and a Prepaid System.

This invention provides an Account Setup and Recharge (ASR) management system that can be deployed in conjunction with a mobile network infrastructure, valueadded service platforms (e.g. SMS, Mobile Internet (WAP, I-mode) platforms, etc.) and a pre-paid system.

The ASR system provides interfaces that provide access for a mobile subscriber (e.g. via SMS, WAP, call centre) to an Account Setup and Recharge (ASR) application. The ASR application implements management operations that can create and maintain special Data Network (DN) access accounts on the pre-paid system that are used to control the mobile subscriber's access to a data network such as Wireless LAN or fixed internet. The invention also describes the implementation of DN access accounts on a pre-paid system.

The system enables quick and convenient access for mobile subscribers to alternative data networks such as WLAN, and establishes the basis for billing or charging such access as part of their mobile network service, i.e. one bill for voice and data services from the network operator or service provider.

In one embodiment of the invention, three ASR access methods between the mobile subscriber and the ASR management system are described: ASR access via SMS, ASR access via mobile Internet service and ASR access via voice call, although the invention is not limited to just these methods. By way of illustration, the principal steps in establishing the account setup and recharge for each of these methods for a wireless LAN hotspot are as follows.

### ASR access via SMS:

Referring to Figure 1, a mobile subscriber enters a WLAN hotspot and finds a premium SMS number advertised to allow ASR access. The subscriber composes an SMS on their mobile device 1 containing a username selected by the subscriber and sends it to the premium SMS number. The SMS is delivered via the SMSC 2 in the mobile network to the SMS ASR Access Interface 4. Information such as the mobile subscriber's MSISDN and selected username are extracted from the SMS and submitted to the ASR application 12 in an access request operation. The ASR application interfaces to the pre-paid system 5 and checks whether a DN access account already exists for the subscriber for the WLAN in question. If no such account exists, it is created by the ASR application and a credit amount as appropriate to the premium SMS number is added to the account. The ASR then sends confirmation of the DN access account to the mobile subscriber via SMS using the SMS ASR Access Interface.

### ASR Access via Voice Call:

A mobile subscriber enters a WLAN hotspot and finds a premium phone number advertised to allow ASR access. The subscriber calls the premium number from their mobile device 1. The premium rate call is routed to a call centre 3 where it is answered by a Customer Services Representative (CSR) 6. At the same time, the call centre automatically accesses a URL (hosted on a web server 8), containing a DN ASR form, and displays the form on the screen of the CSR's PC. The CSR enters information into the ASR form based on information supplied by the mobile subscriber. The calling line identity of the mobile subscriber is automatically retrieved by the call centre and inserted in the ASR form. When the ASR form is completed it is submitted via the web server to the External ASR Access Interface 7. The relevant information is extracted from the setup form and submitted to the ASR application 12. The ASR application performs tasks as described above and sends confirmation of the DN account to the CSR via the External ASR Access Interface and the web server. The CSR gives the confirmation details to the mobile subscriber over the phone. Alternatively, the subscriber may elect to receive the confirmation details directly via SMS as in the SMS access method.

### Access via Mobile Internet

A mobile subscriber enters a WLAN hotspot and finds a mobile internet URI advertised to allow ASR access (WAP is used as an example of mobile internet access for this description). The subscriber uses the WAP browser on their mobile device to access a mobile internet application 13 at the advertised URI. The mobile internet application presents a DN ASR form to the subscriber. The subscriber fills in the form and submits it to the mobile internet application. The application prompts the subscriber to confirm the credit amount to be added to the DN account (this may be based on a mechanism such as a PIN to prevent unauthorised users from accepting charges on the subscriber's account). Once the credit amount is confirmed the mobile internet application submits the DN ASR form via a web server 8 to the External ASR Access Interface 7. Creation of the DN account proceeds as above and the subscriber may elect to have confirmation details returned within the mobile internet session, or via SMS as before.

The ASR system may be used to control ASR by mobile subscribers to alternative data networks that may be managed either by the mobile operator (e.g. the mobile operator also operates WLAN hotspots), or by a 3^{rd} party service provider (e.g. an agreement exists between the mobile operator and the service provider to allow mobile subscribers access to the service provider's data network). Additionally, the ASR system implements functions that allow mobile subscribers to be associated with a corporate DN account on the pre-paid platform as well as personal DN accounts. To support relationships with 3^{rd} party service providers, the ASR system uses special accounts and management functions to support revenue sharing between the mobile operator and the service provider. Furthermore, the ASR system also provides an administration application 10 that allows a system administrator 9 to manage information relating to premium rate numbers, 3^{rd} party service providers, and corporate DN accounts. To allow corporate administration agents 11 to set up and manage members of a corporate group account, the ASR system enables web-based access to the corporate administration functions via a web server 8 and also implements appropriate security functions relevant for this type of access.

A further use of the invention is to allow a mobile subscriber to set up a DN account for one-time use based on a once-off fee and a pre-determined data volume threshold or time interval. The ASR system implements management functions that allow DN accounts to be configured for this type of usage. In addition, the ASR system or pre-paid platform may include an interface to a credit card payments system to allow payments for ASR requests that are not linked to a mobile subscribers pre-paid or post-paid accounts.

Individual modules of the ASR management system in this embodiment of the invention are described in more detail below.

### SMS ASR Access Interface 4

The SMS AAI application carries out the following functions:

### Interface to SMSC

This function is responsible for enabling the reception and transmission of SMS messages with the network SMSC. This interface supports industry standard SMS interface protocols such as SMPP.

### Information Retrieval from SMS Message

This function retrieves information such as a subscriber's MSISDN, username, and premium rate number (PRN), that are used by the ASR application.

### Interface to ASR Application

This function invokes core operations on the ASR application that implement the Access Setup and Recharge functions in this embodiment of the invention. Based on the information retrieved from the SMS message, different operations may be invoked.

### External ASR Access Interface 7

The External AAI application carries out the following functions:

### Interface to Web Server

This function is responsible for web-based or mobile internet-based access to DN ASR forms, etc. This interface supports industry standard web protocols such as HTTP.

### Information Retrieval from Setup Forms

This function retrieves information such as subscriber's MSISDN, username, and premium rate number (PRN), that are used by the ASR application.

### Information Retrieval from Corporate Administration Forms

This function retrieves corporate administration information and uses it to invoke corporate administration operations on the ASR application.

### Interface to ASR Application

This function invokes core operations on the ASR application that implement the Access Setup and Recharge functions in this embodiment of the invention. Based on the information retrieved from the DN ASR form, different operations may be invoked.

### ASR Application 12

This application is responsible for setting up and recharging DN accounts using information retrieved from the subscriber using the ASR Access Interfaces. The ASR Application carries out the following functions:

### Account Existence Check

This function checks for the existence of a DN account for the mobile subscriber and the external data network for which it is being requested. An authorised account may be one of: the mobile subscriber's voice pre-paid account; a DN account operated by the mobile operator; a DN account operated by a service provider; a corporate DN account.

### Subscriber Record/Account Creation

The ASR application invokes the creation of a DN account on the pre-paid platform using this function. If no subscriber record exists already, then a new subscriber record must be created and then a DN account must be associated with the record. If a subscriber record exists already but there is no DN account corresponding to the data network for which ASR is being requested, then a new DN account is created and associated with the subscriber record.

### Determine Type of Account:

The type of account associated with the mobile subscriber and the external data network, for which access is being requested, may vary, e.g. it may be a pre-paid account, a post-paid account, or a corporate account. This function allows the ASR application to invoke the correct sequence of actions corresponding to the type of account.

### Premium Rate Number Discrimination

Based on PRN attributes stored within the ASR system, this function can determine the PRN owner (network operator , service provider, or corporate), the credit value of the PRN, the type of PRN (SMS or Voice), the metering type and thresholds, and the revenue split between the mobile operator and service provider, etc.

### Account Credit

This function invokes an operation to add credit to a DN account stored on the pre-paid platform.

### Invoke Subscriber Credit Check

This function allows a credit check operation to be invoked on the credit balance of a pre-paid subscriber's account on the pre-paid platform. It can also invoke a credit worthiness check against a post-paid subscriber account held on the pre-paid platform.

### DN Account Update Confirmation

This function ensures that confirmations are returned to the mobile subscriber using the confirmation method selected by the subscriber. Where confirmations are returned via SMS, this function uses the SMS ASR Access Interface to generate and transmit an SMS to the subscriber. Alternatively, confirmations may be returned directly via the access method used by the subscriber, e.g. via CSR or mobile internet application.

### Corporate DN Account Management

This function allows a corporate administrator to add, delete or modify corporate users that may be associated with corporate DN accounts, based on the user's MSISDN. It performs authentication and authorisation of corporate administrators based on login mechanisms and passwords. Individual user DN accounts are created for each corporate user but they can all be associated with a single corporate account for charging/billing. Credit checks or pre-paid checks (thresholds based on time or usage) can be specified by the administrator and applied to individual user accounts to provide good credit control mechanisms for corporate use.

### Revenue Apportionment

This function is responsible for ensuring that revenue apportionment agreements between the mobile operator and service providers are implemented. Before revenue from a PRN is credited to a subscriber's account, the revenue apportionment attributes of the PRN are retrieved and the appropriate portions of the PRN revenue are credited to the mobile subscriber's DN access account and the service provider's Revenue Apportionment account.

### ASR Administration 10

This application allows a system administrator to manage (create, delete, modify) information related to prepaid, postpaid and corporate commercial agreements between the network operator and service providers.

### The AS&R administration function 10 performs the following functions:

### Management of the PRN Database

This function allows a system administrator to manage (create, delete, modify) the PRN database. After commercial agreement between the network operator and the PRN supplier (regulatory body) or between the network operator and service provider this function will store details of all assigned premium rate numbers in the PRN database. Management of the PRN database is based on PRN attributes as previously listed.

### Management of Revenue Apportionment (RA) Database

This function allows a system administrator to manage (create, delete, modify) the revenue apportionment database. After commercial agreement between the network operator and service provider this function manages revenue apportionment accounts in the database based on attributes such as: external data network identifier, service provider identity, revenue split (between mobile operator and service provider).

### Management of Corporate Group Accounts

This function allows the creation, deletion or modification of a corporate group account by the system administrator. After commercial agreement between the mobile operator and a corporate customer, this function is responsible for management of corporate group accounts in the ASR system.

### Pre-Paid Platform 5

The pre-paid platform provides account storage, processing and management functions that enable use of the pre-paid platform by the ASR system for access to external data networks. The pre-paid platform performs the following functions:

### DN Account Management

This function is responsible for creation and maintenance of DN accounts. It allows multiple DN accounts to be associated with a mobile subscriber's pre-paid or postpaid account on the prepaid platform. Key attributes of the DN account include: subscriber identity, external network identity, username for DN access, account type (individual, corporate), payment type (pre-paid, post-paid), credit balance, etc.

### Service Provider Account Management

This function is responsible for creation and maintenance of service provider accounts. It allows special accounts to be created for service providers, which can then be used to apportion revenue between the mobile operator and the service provider. Key attributes of the service provider accounts include: service provider identity, external network identity, credit balance, etc.

### Corporate User Account Management

This function is responsible for creation and maintenance of corporate user accounts. It allows corporate accounts to be created that can be used to transfer credit into the DN accounts of individual corporate users. Individual DN accounts can be linked to a corporate user account to enable such credit transfers to be completed for authorised users. Key attributes of the corporate user accounts include: corporate user identity, payment type (pre-paid, post-paid), individual user credit threshold, credit balance, etc.

### Additional Details Relevant to the Invention

The ASR system as described in this embodiment of the invention is a central component in providing the account setup and recharge capability. As a key element of the mobile operator's infrastructure, the ASR system must comply with reliability, availability and scalability requirements typically encountered in carrier environments. For this reason, the ASR system is deployed as a multi-node cluster in which individual nodes may operate either in a load-sharing mode or in a standby mode as required by the network operator. This cluster arrangement provides a highly scaleable ASR system. In load-sharing mode, each node in the cluster operates as a live system. If one node should fail, live requests are routed via the remaining nodes in the cluster, i.e. a node failure results in some loss of capacity but no loss of service. In standby mode, one of the nodes in the cluster is configured as a standby node. If one node should fail, the live requests for the failed node are redirected automatically to the standby node, which replaces the failed node in the cluster, i.e. a node failure results in no loss of capacity. To ensure that transactions can be reliably continued or rolled back following a node failure, all nodes have access to a shared, redundant database and transaction log.

In a minimum configuration, the ASR system is deployed as a dual node cluster operating in either load-sharing or standby mode.

This invention defines functionality at the pre-paid platform that implements additional DN accounts and a set of operations to enable management of these accounts from the ASR system. A feature of this invention is the implementation of an adaptation layer within the ASR system that enables it to be easily integrated with a range of external pre-paid systems. The adaptation layer presents a standard API within the ASR system for invocation of DN account operations towards the pre-paid platform. The adaptation layer performs a mapping from the standard API to the underlying capabilities of the external pre-paid system. The adaptation layer may contain supplementary functions within the ASR system that implement DN account operations that are not supplied by the external pre-paid platform. With this approach, it is possible to ensure that the combination of an ASR system and an external pre-paid platform will provide the full range of capabilities as described for this invention.

For flexibility of the invention, and to provide cost effective solutions, the ASR system may be deployed on an existing physical node, such as the pre-paid platform. As such the ASR system software would still use the API to perform invocation of DN account operations toward the prepaid platform. Similarly, the adaption layer would perform a mapping from the standard API to the underlying capabilities of the internal pre-paid system. The ASR system remains a separate logical entity capable of interfacing to a wide range of platforms and configurations, thus providing enhanced flexibility of deployment.

### Use of the Invention to Provide ASR Services

In the following sections, we illustrate how the invention can be used by a mobile operator to provide a range of Account management services for external data network services. For the following descriptions, the external data network is assumed to be a Wireless LAN (WLAN) although the invention is applicable in a similar way to many other external data networks including fixed data network connections such as used for the Internet.

### WLAN Access Account Set-up and Recharge Using Premium Rate SMS

Premium rate SMS are charged on a different basis to ordinary SMS. The revenue from the overall charge to customers is shared between the network operator (for the carriage of the call) and the service provider (payment for the content or resulting product or service). Customers pay for premium rate SMS through their pre-paid charges or post-paid telephone bills in the normal way.

This scenario can be used to set up an Instant WLAN access prepaid account at the same time as recharging the account with a specified amount. It can also be used for only recharging an account where the account has already been set-up.

Where the network operator wishes to offer different amounts of credit then a range of different premium rate numbers could be used to recharge the account with different monetary values (e.g. 0906 - 99999 10 (£10), 0906 - 99999 20 (£20). This information is stored in the PRN database.

### Network Operator and Service Provider are one and the same

In this case, all revenue from the premium rate SMS goes to the network operator. The WLAN user sends a short message from their mobile device using the advertised premium rate number (e.g. 0906- abcdefg in the UK). The SMS text may contain a number of key fields that allow the subscriber to specify details and preferences for the access being requested. Sample fields that may be included in the text include: a username that will be used for login during the WLAN session, the identity of a corporate group account, selection of pre-paid or post-paid service, etc. The system shall be capable of deriving as much user information as possible without the WLAN user having to input a large amount of data. Where extra information is required the system will have the ability to request the information. This short message is routed to the ASR system via the mobile network SMSC.

The SMS AAI application extracts the relevant information from the SMS and invokes the required operations on the ASR application. The ASR application now uses the DN account operations (via the adaptation layer) to create and update a WLAN access account for the subscriber on the pre-paid platform. The attributes of the access account are automatically set according to the information specified by the subscriber, e.g. corporate or individual account, pre-paid or post-paid access, WLAN service provider identity, etc. If the subscriber already has a pre-paid voice account, the WLAN account is associated with the existing subscriber record. The mobile operator's proportion of the Premium Rate Charge is credited to the WLAN account - e.g. from the pre-paid voice account if it is a pre-paid subscriber, or it may be charged to a post-paid subscriber's bill for later payment.

If this is not the first ASR request submitted by the mobile subscriber for this WLAN account, the ASR application will find the existing WLAN account for the mobile subscriber. In this case, no new account is created and only a credit update operation on the existing account is performed.

### Network Operator and Service Provider are different

In this scenario the network operator is a different entity to the service provider (hot spot owner) and the revenue from the premium rate SMS is divided between them. The ASR system follows the same ASR procedure for premium rate numbers that may be issued by the network operator or the hotspot service provider.

The mobile subscriber performs the same actions as before to request ASR to the WLAN network. The ASR application creates a new account as before. When the account is being credited, the ASR application must determine the mobile operator's proportion of credit by accessing the PRN attributes and update the account. It must also update the service provider's account with the service provider's proportion of the credit. These payments may be made from the pre-paid voice account if it is a pre-paid subscriber, or they may be charged to a post-paid subscriber's bill for later payment.

### WLAN Account Set-up and Recharge Using Premium Rate Voice Call

Premium rate voice calls can be used instead of premium rate SMS messages where this is more convenient for a mobile subscriber. In this example, it is assumed that the premium voice call is routed to a call centre where a customer service representative (CSR) accesses the ASR system on behalf of the mobile subscriber to perform the account set-up and recharge.

As before, this scenario can be used either to create a new WLAN account or to recharge an existing WLAN account. Similarly, different premium rate numbers can be used to provide different credit amounts for the recharge operation.

When a mobile subscriber calls the premium rate number they are connected to a CSR and at the same time the call centre sends a WLAN DN ASR form to the CSR's PC. The CLI of the mobile subscriber may be automatically filled in the form by the call centre. The subscriber provides the information to the CSR in response to the fields in the form. The form is submitted to the ASR system via the External AAI interface, which extracts the relevant information from the form and invokes the required operations on the ASR application.

The ASR application completes the account setup and recharge as before. Depending on the option selected by the subscriber, the ASR application may return confirmation of the account setup by returning information to the CSR, or it may generate an SMS to be transmitted directly to the mobile subscriber.

### WLAN Access Account Set-up and Recharge Using Mobile Internet

This scenario can be used either to create a new WLAN account or to recharge an existing WLAN account.

A mobile subscriber uses a mobile internet client on their mobile device to browse to a WLAN ASR application advertised in the WLAN access area. This application presents a WLAN ASR form to the mobile subscriber on their mobile device, automatically filling in details such as the CLI. The subscriber directly enters the required information on the form and then submits it to the ASR system via the External AAI interface, which extracts the relevant information from the form and invokes the required operations on the ASR application.

The ASR application completes the account setup and recharge as before. Depending on the option selected by the subscriber, the ASR application may return confirmation of the account setup by returning information to the CSR, or it may generate an SMS to be transmitted directly to the mobile subscriber.

### Management of Corporate WLAN access

The ASR application provides operations to allow a corporate administrator to manage the details of the corporate account and corporate users allowed access to the account.

### Set up of group corporate account

Corporate customers will require WLAN access based on a group and an individual account. The group account is set up by a system administrator using a corporate WLAN group ASR form, accessed via a web browser or via direct connection to the ASR application. The system administrator fills out the form based on information supplied by the corporate administrator. This information includes the corporate group username and other details about the corporate customer. This form is submitted to the ASR Administration application which creates a corporate WLAN group account on the prepaid platform. Credit will be added to the account based on a prepaid or postpaid basis dependent upon the agreement between the network operator and corporate customer. Credit in the corporate account can then be accessed by individual corporate users who request access to the WLAN network using the WLAN access mechanisms.

### Set-up of individual corporate account

Individual corporate users will be set-up using corporate ASR forms accessed by a corporate administrator via a web browser. When an individual corporate user ASR form is completed, it is submitted to the ASR system via the External AAI. The corporate administrator will be validated by the External AAI using login mechanisms including special administrators username and passwords stored in the corporate customers database.

When individual corporate users are added to the main corporate account by the corporate administrator, individual PINs may be assigned to the users for additional security. These PINs may be checked by the ASR system before accepting an ASR request from an individual corporate user. For each individual corporate user the ASR system will create an individual account on the pre-paid platform which will be linked to the main corporate account.

Prepaid credit control can be applied to individual corporate accounts, in the same way that prepaid usage is controlled for a personal prepaid account, even though the main corporate account may be postpaid. These options may be specified by the corporate administrator during corporate account setup. This gives the corporate administrator more control over corporate usage.

A further use of the invention is to allow a mobile subscriber to set up an account for use based on a once-off fee for a pre-determined data volume threshold or time interval. The ASR system implements management functions that allow DN accounts to be configured for this type of usage.

### A Method for Setting up a Prepaid WLAN Account which utilises charging based on a single fee

In a hotel a subscriber might want to access a wireless LAN and pay a single fee for a pre-determined data volume threshold or time interval (e.g. 24 hours unlimited access). The hotel would advertise the premium rate number (in agreement with the network operator). The mobile subscriber sends a short message to the premium rate number. This PRN indicates a particular metering type and the thresholds for this metering type. The SMS AAI extracts the relevant information from the SMS and invokes the ASR application to create the single fee account and credit the appropriate revenue (apportioning revenue to the mobile operator and service provider as described previously). As previously noted the other forms of ASR access may be used to manage the use of single fee accounts.

The ASR application sets up the appropriate thresholds on the prepaid system according to the information from the PRN database. The pre-paid platform implements metering capabilities to monitor the specified thresholds (data volume or time interval). When a threshold has been reached, the pre-paid platform disables further access to the WLAN network. This mechanism allows agreement between the hot spot owner (the Hotel) and the network operator for revenue apportionment. This could not be achieved if the Hotel charged their guests directly for hot spot access.

### Roaming

The recharge mechanism can be used in visited networks outside of the network operators home network as long as it supports the short message service and has agreements for exchange of short messages with other networks. This would be the case for a business traveller waiting in a foreign airport and who requires WLAN access. Other ASR access mechanisms may also be used if the relevant regulatory conditions for use can be met.

The invention is not limited to the embodiments described but may be varied in construction and detail.

## Claims

1. An account setup and recharge system comprising:-
a subscriber interface for interfacing with telecommunication network subscribers;
a platform interface comprising means for interfacing with a subscriber account platform;
an account setup and recharge (ASR) function comprising means for dynamically instructing the platform to set up subscriber accounts and for dynamically instructing the platform to recharge accounts in real time in response to subscriber messages.

2. A system as claimed in claim 1, wherein the subscriber interface comprises means (4) for receiving and processing subscriber text messages.

3. A system as claimed in claim 1 or 2, wherein the subscriber interface comprises means (7) for receiving and processing messages from an intermediary server for direct Web or voice interaction with a subscriber.

4. A system as claimed in any preceding claim, wherein the ASR function (12) comprises means for determining and validating payment by subscribers.

5. A system as claimed in claim 4, wherein the ASR function (12) comprises means for allocating subscriber payments according to use of a premium service.

6. A system as claimed in any preceding claim, wherein the ASR function (12) comprises means for performing a check for existence of an account on a platform (5).

7. A system as claimed in any preceding claim, wherein the ASR function (12) comprises means for determining a type of required account based on received subscriber messages.

8. A system as claimed in any preceding claim, wherein the ASR function (12) comprises means for performing a subscriber credit check.

9. A system as claimed in any preceding claim, wherein the ASR function (12) comprises means for apportioning a subscriber payment to a network operator and a service provider according to an agreement.

10. A computer program product comprising a software code for performing operations of an account setup and recharge system as claimed in any preceding claim when executing on a digital computer
